Europäisches Patentamt

European Patent Office

Office européen des brevets

(11) Veröffentlichungsnummer: **0 326 667**
**A1**

## (12) EUROPÄISCHE PATENTANMELDUNG

(21) Anmeldenummer: 88119748.7

(22) Anmeldetag: 26.11.88

(51) Int. Cl.⁴: **B01D 53/36**

(30) Priorität: 28.11.87 DE 3740454

(43) Veröffentlichungstag der Anmeldung:
09.08.89 Patentblatt 89/32

(84) Benannte Vertragsstaaten:
**DE FR GB**

(71) Anmelder: **DORNIER SYSTEM GmbH**
**Postfach 1360**
**D-7990 Friedrichshafen 1(DE)**

(72) Erfinder: **Haas, Jürgen, Dr.**
**Konrad-Adenauer-Strasse 6**
**D-7778 Markdorf(DE)**
Erfinder: **Steinwandel. Jürgen, Dr.**
**Römerweg 1**
**D-7778 Markdorf(DE)**
Erfinder: **Plog, Carsten, Dr.**
**J.-P.-Hebel-Strasse 13**
**D-7778 Markdorf(DE)**

(74) Vertreter: **Landsmann, Ralf, Dipl.-Ing.**
**DORNIER GMBH - Patentabteilung - Kleeweg**
**3**
**D-7990 Friedrichshafen 1(DE)**

(54) Katalysator zur selektiven Reduktion von Stickoxiden.

(57) Gegenstand der Erfindung ist ein katalytisch aktives Pulver, das als Vollkatalysator oder als aktive Beschichtung zur selektiven Reduktion von Stickoxiden mit Ammoniak bei Temperaturen zwischen 180 und 450° C eingesetzt werden kann und dessen aktive Substanz mindestens zu 90 Gew.-% aus einem mit Kupfer dotierten nicht sauren Y-Zeolith mit einer Porenweite von ca. 13 A und einem $SiO_2/Al_2O_3$-Verhältnis > 4 besteht.

EP 0 326 667 A1

## Katalysator zur selektiven Reduktion von Stickoxiden

Die Erfindung betrifft ein katalytisch aktives Pulver, das als Vollkatalysator oder als aktive Beschichtung eingesetzt werden kann.

Zur Einhaltung der vom Gesetzgeber vorgeschriebenen Grenzwerte der $NO_x$-Emission für Großfeuerungsanlagen, wie z.B. Blockheizkraftwerke, reichen primärseitige Maßnahmen allein nicht aus, so daß Verfahren notwendig sind, den $NO_x$-Ausstoß vor dem Kamin zu reduzieren. Diese Verfahren lassen sich im wesentlichen in Waschverfahren und selektive Reduktionsverfahren mit Ammoniak unterteilen.

Um die selektive Reduktion der Stickoxide mit Ammoniak bei akzeptablen Temperaturen durchführen zu können, ist man auf katalytische Verfahren angewiesen, bei denen folgende Hauptreaktionen ablaufen:

$$4\ NO\ +\ 4\ NH_3\ +\ O_2 \rightarrow 4\ N_2\ +\ 6\ H_2O$$
$$6\ NO_2\ +\ 8\ NH_3 \rightarrow 7\ N_2\ +\ 12\ H_2O$$

Konkurrierend hierzu kann auch eine Oxidation des Ammoniaks erfolgen. Daher ist die Wahl einer geeigneten Betriebstemperatur des Katalysators für eine optimale Entstickung evident.

Zur Durchführung der oben angegebenen heterogenen katalysierten Reaktionen wurden bereits verschiedene Katalysatortypen entwickelt. Es sind Verfahren bekannt, bei denen die Stickoxide an einem edelmetallhaltigen Katalysator bei relativ niedriger Temperatur mit Ammoniak reduziert werden. Hier stellen die Edelmetallpreise einen erheblichen Kostenfaktor dar. Außerdem sind die Katalysatoren anfällig gegen im Abgas oder Rauchgas enthaltenen Schwefel.

Preiswertere und weniger anfällige Katalysatoren auf Vanadin-$TiO_2$-Basis werden in DE-OS 26 17 744, US-PS 3,279,884, US-PS 4,010,238 und EPA-A1 0 161 743 beschrieben. Ein allgemeiner Nachteil dieser Katalysatoren ist jedoch die Entsorgung der Schwermetalle bei gebrauchten Katalysatoren.

Weiter sind Verfahren bekannt, die mit Molekularsieb-Katalysatoren arbeiten. Sie werden in GB-PS 14 88 017, DE-OS 37 22 081 und DE-OS 36 35 284 beschrieben. Ein Vorteil der Molekularsiebe ist die Speicherfähigkeit von Ammoniak, so daß kurzzeitige Schwankungen in der Ammoniakdosierung ausgeglichen werden können. Die Verfahren erfordern jeodoch relativ hohe Betriebstemperaturen, bix zu 480° C, und es wird kein vollständiger Umsatz der Stickoxide erreicht.

Aufgabe der Erfindung ist es, einen Katalysator zu entwickeln, der in einem weiten Temperaturbereich einsatzfähig ist und keine Entsorgungsprobleme mit sich bringt. Das Problem des Ammoniakschlupfes und der Ammoniakregelung sollte durch eine möglichst hohe Speicherfähgkeit des Zeolithen für Ammoniak erreicht werden, ohne die Tendenz zu fördern, in sauerstoffhaltigen Abgas Ammoniak zu oxidieren, was durch eine optimale Kombination von Zeolithyp, Acidität und Metallgehalt zu erreichen ist.

Diese Aufgabe wird erfindungsgemäß dadurch gelöst, daß ein mit Kupfer dotierter Y-Zeolith in der Lage ist, die selektive Reduktion von Stickoxiden mit Ammoniak im Bereich zwischen 180 und 450° C so zu katalysieren, daß ein nahezu vollständiger Umsatz erreicht werden kann. In vorteilhafter Weise geht die Ammoniak-Speicher fähigkeit dieses Katalysators bei einer kurzzeitigen Unterbrechung der Ammoniakzufuhr weit über das bei undotierten Zeolithen bekannt Maß hinaus.

Die hohe Aktivität des Katalysators wurde durch einen möglichst hohen Gewichtsanteil des dotierten Zeolithen in der aktiven Masse erreicht. Gleichzeitig wurde die Aktivität durch die Auswahl eines Zeolithen mit großer Porenweite, was eine geringe Diffusionshemmung in den Zeolithkanälen bewirkt, erhöht. Da für die selektive Reduktion von Stickoxiden keine Formselektivität zu erwarten ist, bringen Zeolithe mit geringerer Porenweite keinen Vorteil. Eine hohe Konzentration des Dotierungsmetalls Kupfer bewirkt gleichzeitig eine Erhöhung der Speicherfähigkeit für Ammoniak, während die angestrebte Vermeidung saurer Zentren im Zeolith die unerwünschte Nebenreaktion der Ammoniakoxidation zu Stickoxiden unterdrückt.

Als besonders geeignet zeigte sich ein Katalysator, der durch Einbringen von Kupferionen in einen Zeolithen des Faujasit-Typs erhalten wurde. Hierbei sollte ein möglichst hoher Austauschgrad des Kations angestrebt werden. Das Einbringen des Kupferions kann in einer wässrigen Suspension des Zeolithen in einer Kupfersalzlösung erfolgen. Prinzipiell ist jedes Kupfersalz geeignet. Als besonders vorteilhaft erwies sich der Einsatz von Kupfernitrat oder Kupferchlorid.

Der so erhaltene CuY-Zeolith-Katalysator kann nun pelletiert oder extrudiert werden, oder auf einen formgebenden Körper aufgetragen werden. Zur Stabilisierung können zusätzlich organische oder mineralische Bindemittel zugegeben werden. Als formgebende Körper sind monolithische Wabenkörper aus Cordierit oder ähnlichen Materialien geeignet.

Die Erfindung wird im Folgenden an einem Ausführungsbeispiel und zwei Figuren näher erläutert:

Fig. 1 zeigt die Abhängigkeit der $NO_x$-Konversion von der Temperatur.

Fig.2 zeigt den Umsatzrückgang im Verlaufe der Zeit nach dem Abstellen der Amoniakzufuhr zum Zeitpunkt $t_o = 0$.

Herstellung der katalytisch aktiven Masse.

30 g NaY-Zeolith werden in einer Lösung von 24.15 g $Cu(NO_3)_2 \cdot H_2O$ in 300 ml Wasser 3 h unter Rückfluß gekocht. Der entstandene CuY-Zeolith wird abfiltriert, gewaschen und getrocknet.

Herstellung des Katalysators

Der Katalysator wurde durch Eintauchen eines Cordierit-Wabenkörpers in eine Suspension von 0.3 g CuY-Zeolith/ml Wasser und anschliessend Kalzinieren im Muffelofen bei 550 bis 650° C hergestellt. Der Beschichtungsvorgang wurde so lange wiederholt, bis ein Auftrag von 62 g Zeolith pro Liter Katalysator erreicht wurde.

Aktivitätstest

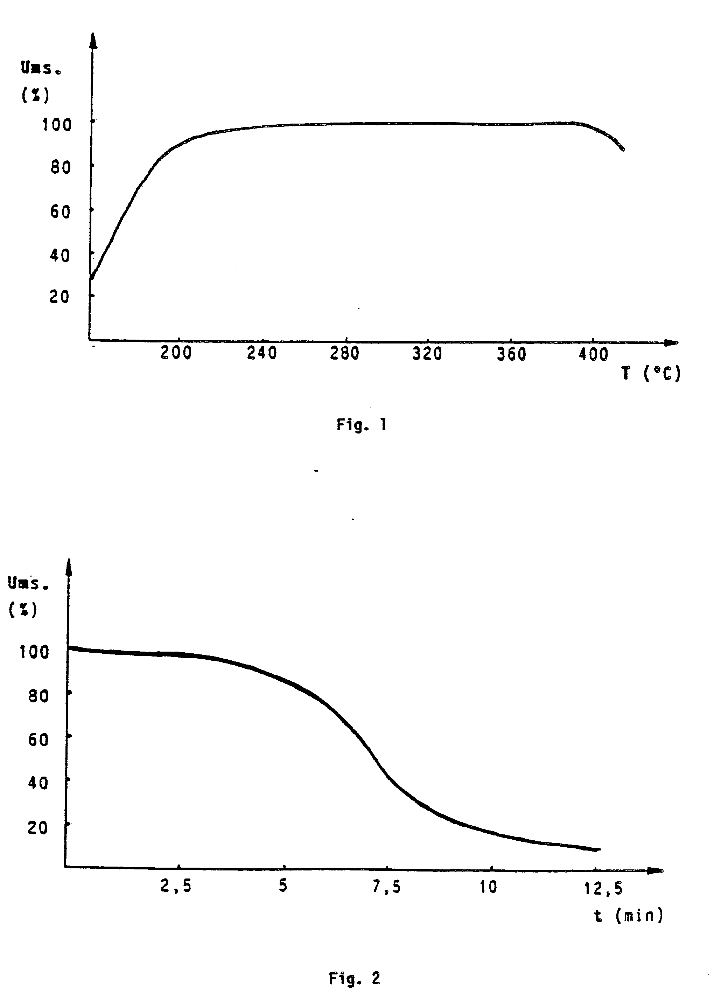

Die Aktivität des mit CuY-Zeolith beschichteten Wabenkörpers wurde in einer Laboranlage im SCR-Betrieg getestet. Hierzu wurde, der Katalysator von einer Gasmischung mit 5 l/min durchströmt, die sich aus 10% $CO_2$, 6 % $O_2$, 4 % $H_2O$, 0.07 % NO, 0.07 % $NH_3$ und 79.86 % $N_2$ zusammensetzte. Die NO-Konzentration wurde am Gaseintritt und am Gasaustritt gemessen. In Abhängigkeit von der Gaseintrittstemperatur ergab sich für die Aktivität des Katalysators der in Fig. 1 gezeigte Verlauf. Ein nahezu vollständiger Umsatz der Stickoxide wird im Bereich zwischen 200 und 400° C erreicht.

Die gute Speicherfähigkeit dieses Katalysators für Ammoniak wird in Fig. 2 dargelegt. Nach einem kurzzeitigen Abstellen der Ammoniakzufuhr unter sonst gleichen Reaktionsbedingungen bei einer Temperatur von 300° C konnte ein nahezu vollständiger NO-Umsatz noch für ca. 5 min. aufrechterhalten werden. Erst nach 10 min. sank der Umsatz unter 20 % ab.

**Ansprüche**

1. Katalytisch aktives Pulver zur Reduktion von Stickoxiden mit Ammoniak bei Temperaturen zwischen 180 und 450° C, **dadurch gekennzeichnet,** daß die aktive Substanz zu mindestens 90 Gew.-% aus einem Kupfer-dotierten nicht sauren Y-Zeolith mit einer Porenweite von ca. 1.3 nm und einem $SiO_2/Al_2O_3$-Verhältnis > 4 besteht.

2. Katalytisch aktives Pulver nach Anspruch 1, dadurch gekennzeichnet, daß der Kupfergehalt des Zeolithen zwischen 9 und 15 Gew.-% liegt.

3. Katalytisch aktives Pulver nach Ansprüchen 1 oder 2, dadurch gekennzeichnet, daß der Zeolith zusätzliche Metalle oder Metallionen als Promotoren enthält.

4. Katalysator zur selektiven Reduktion von Stickoxiden, dadurch gekennzeichnet, daß ein katalytisch aktives Pulver nach mindestens einem der Ansprüche 1 bis 3 auf einen Trägerkörper aufgebracht ist.

5. Katalysator zur selektiven Reduktion von Stickoxiden nach Anspruch 4, dadurch gekennzeichnet, daß zusätzlich zu dem katalytisch aktiven Pulver ein Bindemittel aus keramischen und/oder organischem Material aufgebracht ist.

6. Katalysator zu selektiven Reduktion von Stickoxiden nach Anssprüchen 4 und 5, dadurch gekennzeichnet, daß das katalytisch aktive Pulver nach einem der Ansprüche 1 bis 3 als Vollkatalysator in form von monolithischen Waben, Pellets, Kugeln oder Formkörpern eingesetzt ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 104 361 (E. NISHIKAWA et al.)<br>* Ansprüche 1,4,5; Beispiel 1 * | 1,5 | B 01 D 53/36 |
| A | US-A-4 157 375 (S.M. BROWN et al.)<br>* Ansprüche 1-3,8,10 * | 1,4-6 | |
| A | PATENT ABSTRACTS OF JAPAN<br>vol. 9, no. 306 (C-317)(2029), 3.<br>Dezember 1985; & JP - A - 60 143 833<br>(BABCOCK HITACHI K.K.) 30.05.1985 | 1 | |

RECHERCHIERTE SACHGEBIETE (Int. Cl.4)

B 01 D 53/00

Der vorliegende Recherchenbericht wurde für alle Patentansprüche erstellt

| Recherchenort | Abschlußdatum der Recherche | Prüfer |
|---|---|---|
| BERLIN | 13-04-1989 | BERTRAM H E H |

EPO FORM 1503 03.82 (P0403)